# EUROPEAN PATENT APPLICATION

(11) **EP 4 764 190 A1**
(43) Date of publication of application: **24.06.2026**
(21) Application number: 25744498.4
(22) Date of filing: 16.01.2025
(51) Int. Cl.: F02D 19/06, F02D 19/08, F02D 41/00

(54) **COMBUSTION SYSTEM, GAS ENGINE, AND COMBUSTION SYSTEM DESIGN METHOD**

(30) Priority: 24.01.2024 CN 202410098925
(71) Applicant: Weichai Power Co., Ltd., Weifang, Shandong 261061 (CN)
(72) Inventor: LI, Zhijie, Weifang, Shandong 261061 (CN); LIU, Junlong, Weifang, Shandong 261061 (CN); WANG, Xuepeng, Weifang, Shandong 261061 (CN); ZENG, Xiaoxiao, Weifang, Shandong 261061 (CN); MA, Fei, Weifang, Shandong 261061 (CN); LI, Xucong, Weifang, Shandong 261061 (CN)
(74) Representative: Prinz & Partner mbB
(86) International application number: PCT/CN2025/072637
(87) International publication number: WO 2025/157056

(57) **Abstract**

A combustion system includes a piston (3), a cylinder head (4), a natural gas injector (2), and a fuel injector (1), where a combustion chamber (5) is formed between the piston (3) and the cylinder head (4), an air intake passage (41) is disposed on the cylinder head (4), the air intake passage (41) is configured to cause the airflow in the combustion chamber (5) to flow in a swirling manner along a circumferential direction of the combustion chamber (5), the natural gas injector (2) and the piston (3) are coaxially arranged, and multiple natural gas injection holes (21) are arranged at intervals on the natural gas injector (2) along a circumferential direction; a point of intersection between the central axis of the fuel injector (1) and a first preset plane (100) is a first intersection point, a point of intersection between the central axis of the natural gas injector (2) and the first preset plane (100) is a second intersection point, the first preset plane (100) is perpendicular to the central axis of the piston (3), and a line connecting the first intersection point and the second intersection point is a reference line (300); a first fuel injection hole (11) and a second fuel injection hole (12) are disposed on the fuel injector (1), the first fuel injection hole (11) and the second fuel injection hole (12) are located on two sides of the reference line (300), an included angle between the central axis of the first fuel injection hole (11) and the reference line (300) is α, and an included angle between the central axis of the second fuel injection hole (12) and the reference line (300) is β, where α > β; and a plane perpendicular to the reference line (300) and containing the central axis of the fuel injector (1) is a second preset plane (200), the first fuel injection hole (11) is located on a side of the second preset plane (200) facing the natural gas injector (2), and an included angle between a fuel jet injection direction of the second fuel injection hole (12) and a tangential direction of the airflow flowing through the fuel injector (1) in the swirling manner is an acute angle. The fuel jet injected by the second fuel injection hole ignites some natural gas jets on the same side as the second fuel injection hole. Under the action of the swirl in the combustion chamber, as the second fuel injection hole continues injecting the fuel jet, the flame formed by ignition of the natural gas jets by the fuel jet gradually extends along a swirling direction so that the fuel jet injected by the second fuel injection hole can ignite the natural gas jets on a side of the natural gas injector facing away from the fuel injector. Further provided are a gas engine and a combustion system design method.

## Description

This application claims priority to Chinese Patent Application No. 202410098925.8 filed with the China National Intellectual Property Administration (CNIPA) on Jan. 24, 2024, the disclosure of which is incorporated herein by reference in its entirety.

### TECHNICAL FIELD

The present application relates to the field of engine technology, for example, a combustion system, a gas engine, and a combustion system design method.

### BACKGROUND

A high-pressure direct injection compression ignition natural gas engine is simply referred to as a high-pressure direct injection (HPDI) engine. In the HPDI engine, 5% diesel fuel is injected into the cylinder before the compression top dead center to serve as an ignition source, while 95% natural gas is injected into the flame at a pressure of 300 bar to serve as the main fuel for combustion and power output. The HPDI engine can maintain the same power, torque, and power performance as those of the conventional diesel engine and achieve 20% higher power and torque than those of the spark-ignition gas engine.

In the related art, some HPDI engines use coupled injectors, that is, diesel injection and natural gas injection are performed by the same injector in the HPDI engine. In the preceding HPDI engine that uses the coupled injector, since the natural gas passage within the injector needs to be sealed by diesel fuel, the pressure of the gas rail determines the diesel injection pressure and the natural gas injection pressure. Due to the difficulty in gas rail manufacturing, the current gas rail pressure is lower. Although the diesel consumption is lower, the overall injection duration is longer, leading to poorer diesel atomization.

Therefore, the related art provides a dual-injector combustion system in which a natural gas injector is disposed at the center of the combustion chamber and a fuel injector is disposed at the edge, thereby separating diesel injection from natural gas injection. For the preceding combustion system using two injectors, if a smaller number of diesel fuel jets ignite a larger number of natural gas jets, the natural gas jets on a side facing away from the fuel injector are difficult to ignite, resulting in lower heat exchange efficiency and poorer emission performance.

### SUMMARY

The present application provides a combustion system, a gas engine, and a combustion system design method, thereby better igniting multiple natural gas jets with the minimum number of fuel jets, shortening the combustion duration, and improving the combustion efficiency of the gas engine.

The present application provides a combustion system. The combustion system includes a piston, a cylinder head, a natural gas injector, and a fuel injector, where a combustion chamber is formed between the piston and the cylinder head, an air intake channel is disposed on the cylinder head, the air intake passage is configured to direct the airflow in the combustion chamber to flow in a swirling manner along a circumferential direction of the combustion chamber, the natural gas injector and the piston are coaxially arranged, and multiple natural gas injection holes are arranged at intervals on the natural gas injector along a circumferential direction.

A point of intersection between the central axis of the fuel injector and a first preset plane is a first intersection point, a point of intersection between the central axis of the natural gas injector and the first preset plane is a second intersection point, the first preset plane is perpendicular to the central axis of the piston, and a line connecting the first intersection point and the second intersection point is a reference line.

The fuel injector is provided with a first fuel injection hole and a second fuel injection hole, the first fuel injection hole and the second fuel injection hole are located on two sides of the reference line, an included angle between the central axis of the first fuel injection hole and the reference line is α, and an included angle between the central axis of the second fuel injection hole and the reference line is β, where α > β.

A plane perpendicular to the reference line and containing the central axis of the fuel injector is a second preset plane, the first fuel injection hole is located on a side of the second preset plane facing the natural gas injector, and an included angle between a fuel jet injection direction of the second fuel injection hole and a tangential direction of the airflow flowing through the fuel injector in the swirling manner is an acute angle.

In one or more embodiments, the diameter of the first fuel injection hole is D₁, and the diameter of the second fuel injection hole is D₂, where D₁ > D₂.

In one or more embodiments, the central axis of the first fuel injection hole and the central axis of the second fuel injection hole are coplanar.

In one or more embodiments, an included angle between the central axis of the first fuel injection hole and the central axis of the fuel injector is a first injection cone angle, and an included angle between the central axis of the second fuel injection hole and the central axis of the fuel injector is a second injection cone angle, where the first injection cone angle and the second injection cone angle are equal to each other and are both θ, where θ ≤ 90°.

In one or more embodiments, 5° ≤ α ≤ 60°, and 5° ≤ β ≤ 60°.

In one or more embodiments, an included angle between the central axis of the natural gas injection hole and the central axis of the natural gas injector is γ, where 60° ≤ γ ≤ 85°.

In one or more embodiments, eight natural gas injection holes are uniformly arranged circumferentially along the central axis of the natural gas injector.

In one or more embodiments, the central axis of each natural gas injection hole and the central axis of the natural gas injector are both located in a third preset plane, and the fuel injector is located in a region formed by two adjacent third preset planes.

The present application further provides a gas engine. The gas engine includes a cylinder block and the combustion system of any of the preceding solutions, where the cylinder block is connected to the cylinder head, a piston bore is disposed on the cylinder block, and the piston is slidably disposed in the piston bore.

The present application further provides a combustion system design method. The method is applied to the combustion system of any of the preceding solutions and includes the steps below.

A three-dimensional model of the combustion system is constructed, and a three-dimensional combustion simulation is performed based on the three-dimensional model of the combustion system.

If a fuel jet injected by the first fuel injection hole is capable of reaching a bottom surface of the natural gas injector and/or a top surface of the piston, an included angle between the central axis of the first fuel injection hole and the central axis of the fuel injector is reduced.

If a fuel jet injected by the second fuel injection hole is capable of reaching the bottom surface of the natural gas injector and/or the top surface of the piston, an included angle between the central axis of the second fuel injection hole and the central axis of the fuel injector is reduced.

If the fuel jet injected by the second fuel injection hole is capable of reaching a side surface of the natural gas injector, the included angle between the central axis of the second fuel injection hole and the central axis of the fuel injector is increased.

If the fuel jet injected by the second fuel injection hole is incapable of igniting natural gas jets located on the same side of the reference line as the second fuel injection hole and natural gas jets located on a side of the natural gas injector facing away from the fuel injector, the diameter of the second fuel injection hole is increased.

If the fuel jet injected by the first fuel injection hole is incapable of igniting other natural gas jets, the diameter of the first fuel injection hole is increased, where the other natural gas jets are located on the same side of the reference line as the first fuel injection hole, and exclude the natural gas jets located on the side of the natural gas injector facing away from the fuel injector.

### BRIEF DESCRIPTION OF DRAWINGS

FIG. 1 is a schematic view of a combustion system using a coupled injector according to an embodiment.
FIG. 2 is a schematic view of another combustion system using a coupled injector according to an embodiment.
FIG. 3 is a schematic view of a combustion system using two injectors according to an embodiment.
FIG. 4 is a sectional view of a combustion system in a first preset plane according to an embodiment of the present application.
FIG. 5 is another sectional view of a combustion system in a first preset plane according to an embodiment of the present application.
FIG. 6 is a sectional view of a fuel injector in a second preset plane according to an embodiment of the present application.
FIGS. 7 to 9 are process state views illustrating that fuel oil injected by a fuel injector ignites natural gas jets injected by a natural gas injector according to an embodiment of the present application.
FIG. 10 is a structural view of a gas engine according to an embodiment of the present application.
FIG. 11 is a sectional view of a combustion system according to an embodiment of the present application.
FIG. 12 is a flowchart of a combustion system design method according to an embodiment of the present application.

### Reference list

- 1000': natural gas injector
- 2000': fuel injector
- 1: fuel injector
- 11: first fuel injection hole
- 12: second fuel injection hole
- 2: natural gas injector
- 21: natural gas injection hole
- 3: piston
- 4: cylinder head
- 41: air intake passage
- 5: combustion chamber
- 42: intake valve
- 6: cylinder liner
- 7: cylinder block
- 71: piston bore
- 100: first preset plane
- 200: second preset plane
- 300: reference line

### DETAILED DESCRIPTION

The present application is described below in conjunction with the drawings and embodiments. The embodiments described herein are merely intended to explain and not to limit the present application. For ease of description, only part, not all, of the structures related to the present application are illustrated in the drawings.

In the description of the present application, the terms "joined", "connected", and "fixed" are to be understood in a broad sense unless otherwise specified and limited. For example, the term "connected" may refer to "fixedly connected", "detachably connected", or "integrated", may refer to "mechanically connected" or "electrically connected", may refer to "connected directly" or "connected indirectly through an intermediary", or may refer to "connected inside two elements" or "an interaction relation between two elements". Meanings of the preceding terms in the present application may be understood according to actual situations.

In the present application, unless otherwise specified and limited, when a first feature is described as "on" or "below" a second feature, the first feature and the second feature may be in direct contact or be in contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

In the description of this embodiment, orientations or position relations indicated by terms such as "upper", "lower", and "right" are based on the drawings. These orientations or position relations are intended only to facilitate description and simplify operation and not to indicate or imply that a device or element referred to must have such particular orientations or must be configured or operated in such particular orientations. Thus, these orientations or position relations are not to be construed as limiting the present application. Additionally, terms "first" and "second" are used for distinguishing between descriptions and have no special meanings.

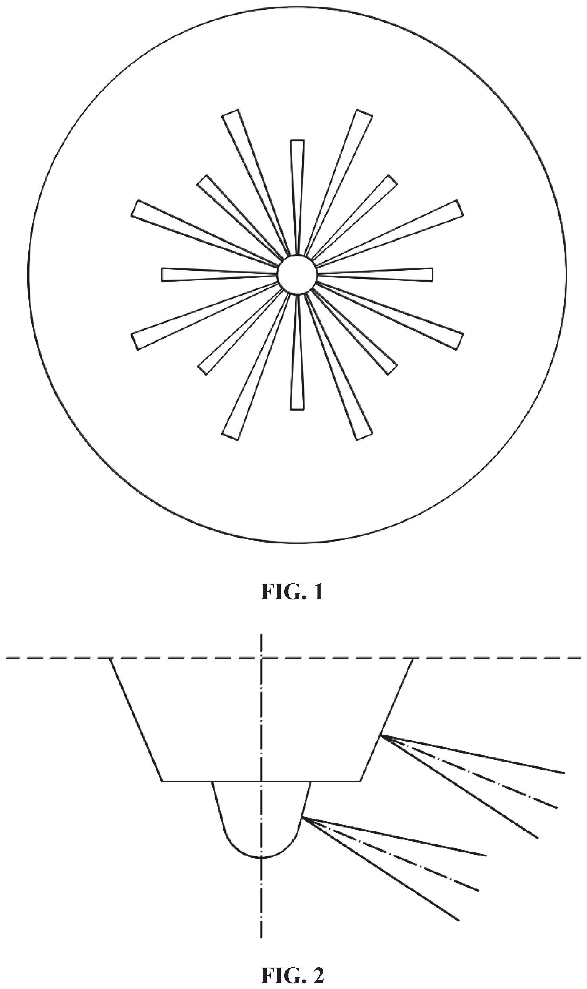

In an embodiment, some HPDI engines use coupled injectors, that is, diesel injection and natural gas injection are performed by the same injector in the HPDI engine. The arrangement is shown in FIGS. 1 and 2. The injector has two layers of holes, injection holes in the lower layer are diesel injection holes, and injection holes in the upper layer are natural gas injection holes. Multiple natural gas injection holes are arranged at intervals along the circumferential direction of the injector, and multiple diesel injection holes are arranged at intervals along the circumferential direction of the injector. The multiple natural gas injection holes are arranged in one-to-one correspondence with the multiple diesel injection holes. The central axis of the natural gas injection hole and the central axis of the corresponding diesel injection hole are located in the same plane and are parallel. The diesel fuel jet injected by the diesel injection hole is shorter than the natural gas jet injected by the natural gas injection hole.

In the preceding HPDI engine that uses the coupled injector, since the natural gas passage within the injector needs to be sealed by diesel fuel, the pressure of the gas rail determines the diesel injection pressure and the natural gas injection pressure. Due to the difficulty in gas rail manufacturing, the current gas rail pressure is lower. Although the diesel consumption is lower, the overall injection duration is longer, leading to poorer diesel atomization.

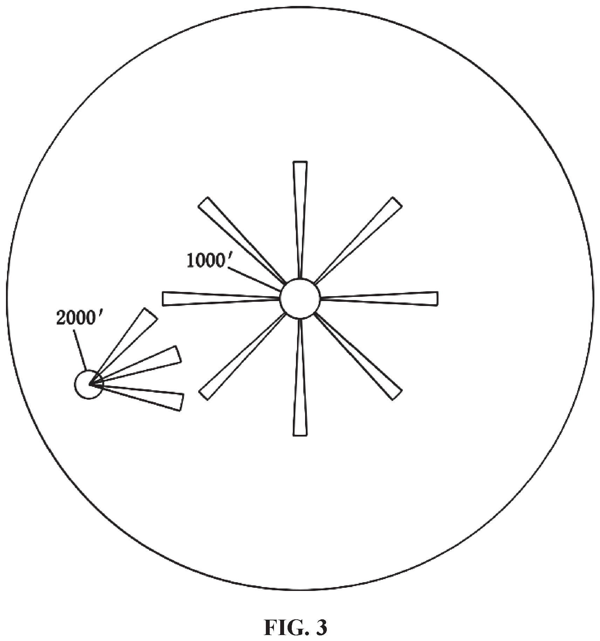

Therefore, another embodiment proposes a dual-injector combustion system. As shown in FIG. 3, a natural gas injector 1000' is disposed at the center of a combustion chamber, and a fuel injector 2000' is disposed at the edge, thereby separating diesel injection from natural gas injection. In this manner, the diesel injection pressure can be prevented from being affected by the natural gas rail pressure, the diesel injection pressure can be increased, the injection duration can be shortened, and fuel atomization can be improved.

For the preceding combustion system using two injectors, since the fuel injector is disposed at the edge, the diesel injection holes can only be provided in the direction facing the natural gas; if the diesel injection holes are provided in the direction away from the natural gas, the diesel fuel fails to ignite the natural gas, and the diesel fuel is sprayed on the cylinder liner. If a smaller number of diesel fuel jets ignite a larger number of natural gas jets, the natural gas jets on a side facing away from the fuel injector are difficult to ignite, resulting in lower heat exchange efficiency and poorer emission performance.

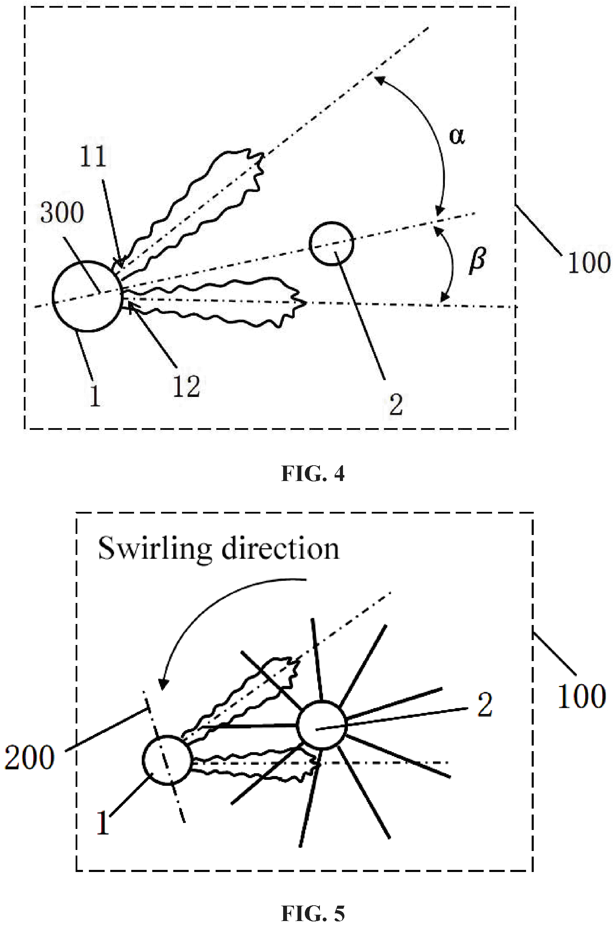

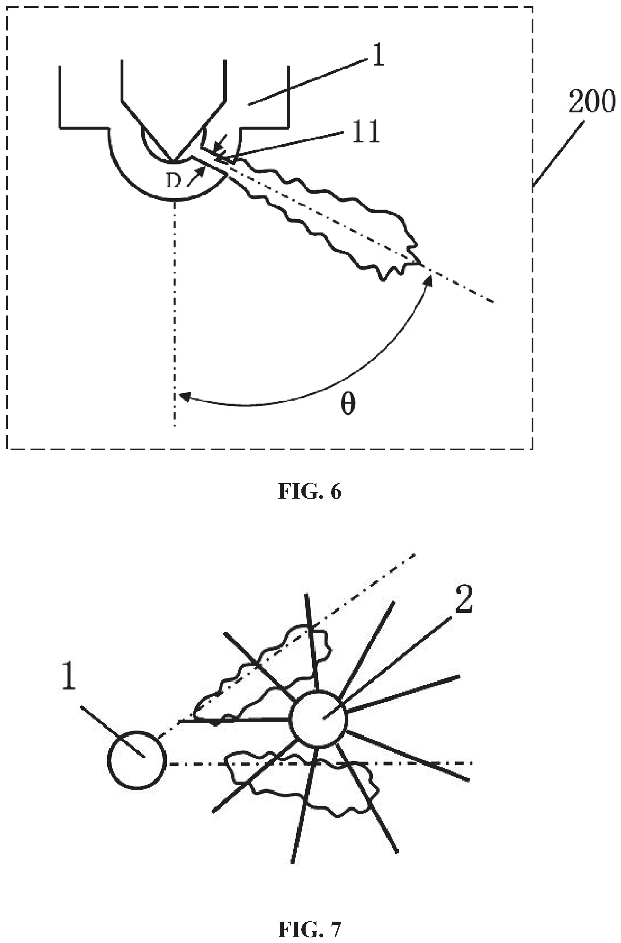

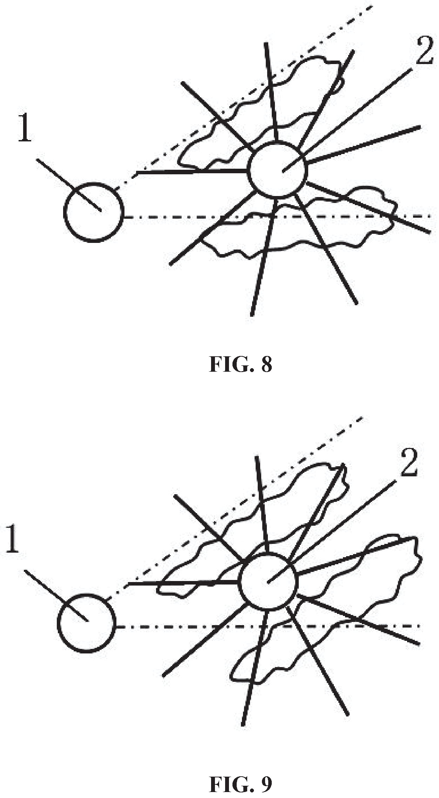

As shown in FIGS. 4 to 11, the embodiment of the present application provides a combustion system. The combustion system includes a piston 3, a cylinder head 4, a natural gas injector 2, and a fuel injector 1. A combustion chamber 5 is formed between the piston 3 and the cylinder head 4. An air intake passage 41 is disposed on the cylinder head 4. The air intake passage 41 is configured to direct the airflow in the combustion chamber 5 to flow in a swirling manner along the circumferential direction of the combustion chamber 5. The natural gas injector 2 and the piston 3 are coaxially arranged. Multiple natural gas injection holes 21 are arranged at intervals on the natural gas injector 2 along the circumferential direction. How to design the air intake passage 41 to direct the airflow entering the combustion chamber 5 through the air intake passage 41 to flow in a swirling manner along the circumferential direction of the combustion chamber 5 is the related art in the field. The details are not repeated here.

The point of intersection between the central axis of the fuel injector 1 and a first preset plane 100 is a first intersection point, the point of intersection between the central axis of the natural gas injector 2 and the first preset plane 100 is a second intersection point, the first preset plane 100 is perpendicular to the central axis of the piston 3, and the line connecting the first intersection point and the second intersection point is a reference line 300.

A first fuel injection hole 11 and a second fuel injection hole 12 are disposed on the fuel injector 1. The first fuel injection hole 11 and the second fuel injection hole 12 are located on two sides of the reference line 300. The included angle between the central axis of the first fuel injection hole 11 and the reference line 300 is α, the included angle between the central axis of the second fuel injection hole 12 and the reference line 300 is β, and α > β.

A plane perpendicular to the reference line 300 and containing the central axis of the fuel injector 1 is a second preset plane 200. The first fuel injection hole 11 is located on a side of the second preset plane 200 facing the natural gas injector 2. The included angle between the fuel jet injection direction of the second fuel injection hole 12 and the tangential direction of the airflow flowing through the fuel injector 1 in a swirling manner is an acute angle.

In the combustion system, the natural gas injector 2 and the piston 3 are coaxially arranged, the fuel injector 1 is disposed on a side of the natural gas injector 2, the first fuel injection hole 11 and the second fuel injection hole 12 are located on two sides of the reference line 300, α > β, and the included angle between the fuel jet injection direction of the second fuel injection hole 12 and the tangential direction of the airflow flowing past the fuel injector 1 in a swirling manner is an acute angle. The fuel jet injected by the second fuel injection hole 12 ignites some natural gas jets on the same side as the second fuel injection hole 12. Under the action of the swirl in the combustion chamber 5, as the second fuel injection hole 12 continues injecting the fuel jet, the flame formed by ignition of the natural gas jets by the fuel jet gradually extends along a swirling direction so that the fuel jet injected by the second fuel injection hole 12 can ignite the natural gas jets on a side of the natural gas injector 2 facing away from the fuel injector 1. The fuel jet injected by the first fuel injection hole 11 ignites the remaining natural gas jets. In this manner, the fuel jets that are injected by the fuel injector 1 and on two sides of the reference line 300 can achieve the optimal ignition effect so that all natural gas jets can be ignited with the minimum number of fuel jets, thereby improving the ignition effect of igniting natural gas with fuel oil and achieving higher thermal efficiency and lower emissions.

In some embodiments, the diameter of the first fuel injection hole 11 is D₁, and the diameter of the second fuel injection hole 12 is D₂, where D₁ > D₂. Since the fuel jet injected by the first fuel injection hole 11 is against the swirling direction, the airflow flowing in a swirling manner within the combustion chamber 5 limits the injection distance of the fuel jet injected by the first fuel injection hole 11. By configuring D1 > D2, the fuel jet injected by the first fuel injection hole 11 can ignite the other natural gas jets that are located on the same side of the reference line 300 as the second fuel injection hole 12, and exclude the natural gas jets on a side of the natural gas injector 2 facing away from the fuel injector 1.

In some embodiments, 5° ≤ α ≤ 60°, and 5° ≤ β ≤ 60°. This configuration prevents the fuel jet injected by the first fuel injection hole 11 from contacting the side surface of the natural gas injector 2, and similarly prevents the fuel jet injected by the second fuel injection hole 12 from contacting the side surface of the natural gas injector 2, thereby extending the service life of the natural gas injector 2.

α may be any value between 5° and 60°. For example, α may be any value among 5°, 10°, 15°, 20°, 25°, 30°, 35°, 40°, 45°, 50°, 55°, and 60°. β may be any value between 5° and 60°. For example, β may be any value among 5°, 10°, 15°, 20°, 25°, 30°, 35°, 40°, 45°, 50°, 55°, and 60°.

In some embodiments, the central axis of the first fuel injection hole 11 and the central axis of the second fuel injection hole 12 are coplanar. The included angle between the central axis of the first fuel injection hole 11 and the central axis of the fuel injector 1 is a first injection cone angle, and the included angle between the central axis of the second fuel injection hole 12 and the central axis of the fuel injector 1 is a second injection cone angle. The first injection cone angle and the second injection cone angle are equal to each other and are both θ, where θ ≤ 90°. Based on this configuration, the fuel jet injected by the first fuel injection hole 11 can be in contact with the natural gas jets located on the same side of the reference line 300 as the first fuel injection hole 11, and the fuel jet injected by the second fuel injection hole 12 can be in contact with the natural gas jets located on the same side of the reference line 300 as the second fuel injection hole 12.

In some embodiments, the combustion chamber 5 includes a combustion chamber recess on the top surface of the piston 3, a central boss is disposed at the bottom of the combustion chamber recess, an annular boss is disposed on the circumferential sidewall of the combustion chamber recess around the central boss, a first recess is formed between the annular boss and the bottom of the combustion chamber recess. The included angle between the central axis of the natural gas injection hole 21 and the central axis of the natural gas injector 2 is γ, where 60° ≤ γ ≤ 85°.

γ may be any value between 60° and 85°. For example, γ may be any value among 60°, 65°, 70°, 75°, 80°, and 85°.

In this manner, the natural gas injection holes 21 can inject natural gas into the first recess, and under the guidance of a second recess, a swirling flow is formed, thereby improving the uniformity of the natural gas within the first recess.

In some embodiments, the cross section of the combustion chamber 5 in any preset symmetry plane is symmetrical about the central axis of the combustion chamber 5, and the central axis of the combustion chamber 5 is located in the preset symmetry plane. In this manner, the entire combustion chamber 5 can have a symmetrical structure.

In some embodiments, eight natural gas injection holes 21 are uniformly arranged circumferentially along the central axis of the natural gas injector 2. By using the eight natural gas injection holes 21 uniformly arranged along the circumferential direction of the natural gas injector 2, in conjunction with the symmetrical combustion chamber 5, the uniformity of the natural gas within the combustion chamber 5 can be improved.

In some embodiments, the central axis of each natural gas injection hole 21 and the central axis of the natural gas injector 2 are both located in a third preset plane, and the fuel injector 1 is located in a region formed by two adjacent third preset planes. In this manner, it can be ensured that the fuel jets injected by the first fuel injection hole 11 and the second fuel injection hole 12 can ignite all the natural gas, thereby improving the ignition effect of igniting natural gas with fuel oil. Assuming that eight natural gas injection holes 21 are provided, the eight natural gas injection holes 21 correspond to eight third preset planes. The plane in which the center of the natural gas injection hole 21 and the central axis of the natural gas injector 2 are located is the third preset plane.

The embodiment of the present application further provides a gas engine, the gas engine includes a cylinder block 7 and the combustion system of any of the preceding embodiments, the cylinder block 7 is provided with a piston bore 71, and the piston 3 is axially movably disposed in the piston bore 71. The gas engine has the same technical effects as the preceding combustion system, and the details are not repeated here. The fuel injector 1 of the gas engine may be a diesel injector, and the natural gas injected by the natural gas injector 2 may be methanol, methane, or the like, which is not limited here. The gas engine further includes an intake valve 42, a cylinder liner 6, and the like.

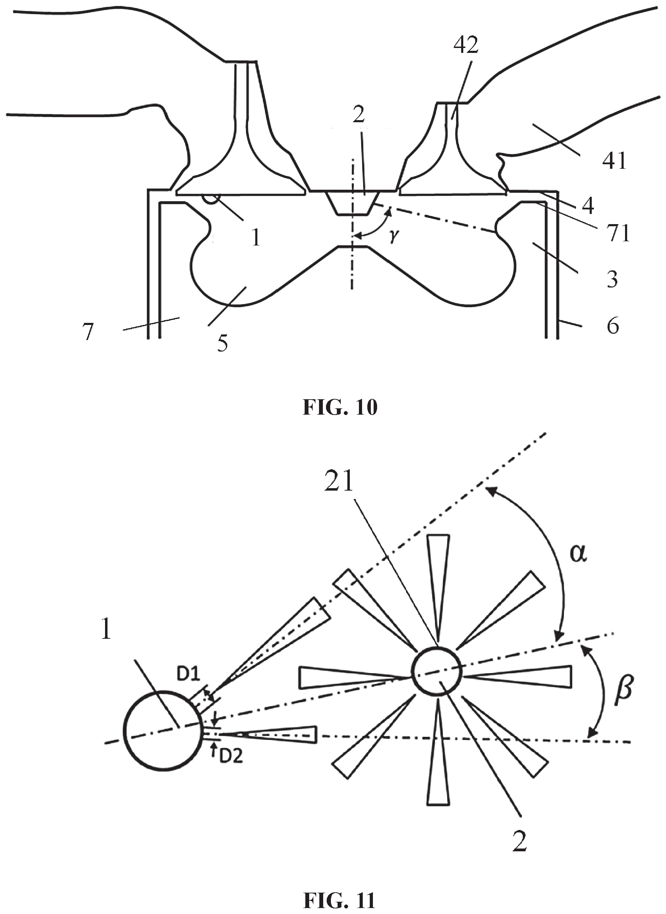

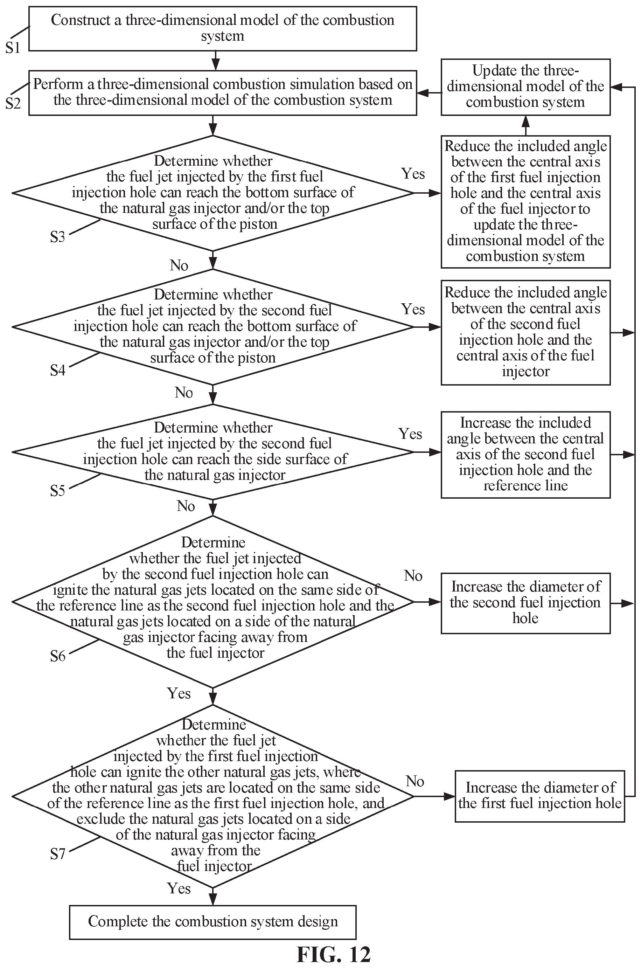

FIG. 12 is a flowchart of a combustion system design method according to an embodiment of the present application. As shown in FIG. 10, the embodiment of the present application further provides a combustion system design method. The combustion system design method includes the steps below.

In S1, a three-dimensional model of the combustion system is constructed.

In S2, a three-dimensional combustion simulation is performed based on the three-dimensional model of the combustion system.

In S3, whether the fuel jet injected by the first fuel injection hole 11 can reach the bottom surface of the natural gas injector 2 and/or the top surface of the piston is determined; if so, the included angle between the central axis of the first fuel injection hole 11 and the central axis of the fuel injector 1 is reduced to update the three-dimensional model of the combustion system and S3 is performed; if not, S4 is performed.

In S4, whether the fuel jet injected by the second fuel injection hole 12 can reach the bottom surface of the natural gas injector 2 and/or the top surface of the piston is determined; if so, the included angle between the central axis of the second fuel injection hole 12 and the central axis of the fuel injector 1 is reduced to update the three-dimensional model of the combustion system and S3 is performed; if not, S5 is performed.

In S5, whether the fuel jet injected by the second fuel injection hole 12 can reach the side surface of the natural gas injector 2 is determined; if so, the included angle between the central axis of the second fuel injection hole 12 and the reference line 300 is increased to update the three-dimensional model of the combustion system and S3 is performed; if not, S6 is performed.

In S6, whether the fuel jet injected by the second fuel injection hole 12 can ignite the natural gas jets located on the same side of the reference line 300 as the second fuel injection hole 12 and the natural gas jets located on a side of the natural gas injector 2 facing away from the fuel injector 1 is determined; if so, S7 is performed; if not, the diameter of the second fuel injection hole 12 is increased to update the three-dimensional model of the combustion system and S3 is performed.

In S7, whether the fuel jet injected by the first fuel injection hole 11 can ignite the other natural gas jets is determined, where the other natural gas jets are located on the same side of the reference line 300 as the first fuel injection hole 11, and exclude the natural gas jets located on a side of the natural gas injector 2 facing away from the fuel injector 1; if so, the combustion system design is completed; if not, the diameter of the first fuel injection hole 11 is increased to update the three-dimensional model of the combustion system and S3 is performed.

In step S3, whether the fuel jet injected by the first fuel injection hole 11 can reach the bottom surface of the natural gas injector 2 and/or the top surface of the piston is determined according to the combustion simulation result. In step S4, whether the fuel jet injected by the second fuel injection hole 12 can reach the bottom surface of the natural gas injector 2 and/or the top surface of the piston is determined according to the combustion simulation result. In step S5, whether the fuel jet injected by the second fuel injection hole 12 can reach the side surface of the natural gas injector 2 is determined according to the combustion simulation result. In step S6, whether the fuel jet injected by the second fuel injection hole 12 can ignite the natural gas jets located on the same side of the reference line 300 as the second fuel injection hole 12 and the natural gas jets located on a side of the natural gas injector 2 facing away from the fuel injector 1 is determined according to the combustion simulation result. In step S7, whether the fuel jet injected by the first fuel injection hole 11 can ignite the other natural gas jets that are located on the same side of the reference line 300 as the first fuel injection hole 11, and exclude the natural gas jets located on a side of the natural gas injector 2 facing away from the fuel injector 1 is determined according to the combustion simulation result. As for how to make the preceding determination according to the combustion simulation result, observation by human eyes is adopted. The details are not repeated here.

The combustion system design method provided in this embodiment can quickly design the combustion systems required by different engine models and achieve the optimization design of the combustion system through the three-dimensional combustion simulation. Compared with experimental selection, the method requires less time and has lower costs. Through the optimization design of the combustion system, natural gas and air can be uniformly mixed within the combustion chamber and uniformly ignited by the fuel injector 1, thereby shortening the combustion duration and improving the thermal efficiency of the engine.

## Claims

1. A combustion system, comprising a piston (3), a cylinder head (4), a natural gas injector (2), and a fuel injector (1), wherein a combustion chamber (5) is formed between the piston (3) and the cylinder head (4), an air intake passage (41) is disposed on the cylinder head (4), the air intake passage (41) is configured to direct an airflow in the combustion chamber (5) to flow in a swirling manner along a circumferential direction of the combustion chamber (5), the natural gas injector (2) and the piston (3) are coaxially arranged, and a plurality of natural gas injection holes (21) are arranged at intervals on the natural gas injector (2) along a circumferential direction;
a point of intersection between a central axis of the fuel injector (1) and a first preset plane (100) is a first intersection point, a point of intersection between a central axis of the natural gas injector (2) and the first preset plane (100) is a second intersection point, the first preset plane (100) is perpendicular to a central axis of the piston (3), and a line connecting the first intersection point and the second intersection point is a reference line (300);
the fuel injector (1) is provided with a first fuel injection hole (11) and a second fuel injection hole (12), the first fuel injection hole (11) and the second fuel injection hole (12) are located on two sides of the reference line (300), an included angle between a central axis of the first fuel injection hole (11) and the reference line (300) is α, and an included angle between a central axis of the second fuel injection hole (12) and the reference line (300) is β, wherein α > β; and
a plane perpendicular to the reference line (300) and containing the central axis of the fuel injector (1) is a second preset plane (200), the first fuel injection hole (11) is located on a side of the second preset plane (200) facing the natural gas injector (2), and an included angle between a fuel jet injection direction of the second fuel injection hole (12) and a tangential direction of the airflow flowing through the fuel injector (1) in the swirling manner is an acute angle.

2. The combustion system of claim 1, wherein a diameter of the first fuel injection hole (11) is D₁, and a diameter of the second fuel injection hole (12) is D₂, wherein D₁ > D₂.

3. The combustion system of claim 1, wherein the central axis of the first fuel injection hole (11) and the central axis of the second fuel injection hole (12) are coplanar.

4. The combustion system of claim 1, wherein an included angle between the central axis of the first fuel injection hole (11) and the central axis of the fuel injector (1) is a first injection cone angle, and an included angle between the central axis of the second fuel injection hole (12) and the central axis of the fuel injector (1) is a second injection cone angle, wherein the first injection cone angle and the second injection cone angle are equal to each other and are both θ, wherein θ ≤ 90°.

5. The combustion system of claim 1, wherein 5° ≤ α ≤ 60°, and 5° ≤ β ≤ 60°.

6. The combustion system of claim 1, wherein an included angle between a central axis of a natural gas injection hole (21) of the plurality of natural gas injection holes (21) and the central axis of the natural gas injector (2) is γ, wherein 60° ≤ γ ≤ 85°.

7. The combustion system of claim 1, wherein eight natural gas injection holes (21) are uniformly arranged circumferentially along the central axis of the natural gas injector (2).

8. The combustion system of claim 7, wherein a central axis of each of the eight natural gas injection holes (21) and the central axis of the natural gas injector (2) are both located in a third preset plane, and the fuel injector (1) is located in a region formed by two adjacent third preset planes.

9. A gas engine, comprising a cylinder block (7) and the combustion system of any one of claims 1 to 8, wherein the cylinder block (7) is connected to the cylinder head (4), a piston bore (71) is disposed on the cylinder block (7), and the piston (3) is slidably disposed in the piston bore (71).

10. A combustion system design method, the method being applied to the combustion system of any one of claims 1 to 8 and comprising:
constructing a three-dimensional model of the combustion system and performing a three-dimensional combustion simulation based on the three-dimensional model of the combustion system;
in response to a fuel jet injected by the first fuel injection hole (11) being capable of reaching at least one of a bottom surface of the natural gas injector (2) or a top surface of the piston, reducing an included angle between the central axis of the first fuel injection hole (11) and the central axis of the fuel injector (1);
in response to a fuel jet injected by the second fuel injection hole (12) being capable of reaching at least one of the bottom surface of the natural gas injector (2) or the top surface of the piston, reducing an included angle between the central axis of the second fuel injection hole (12) and the central axis of the fuel injector (1);
in response to the fuel jet injected by the second fuel injection hole (12) being capable of reaching a side surface of the natural gas injector (2), increasing the included angle between the central axis of the second fuel injection hole (12) and the reference line (300);
in response to the fuel jet injected by the second fuel injection hole (12) being incapable of igniting natural gas jets located on a same side of the reference line (300) as the second fuel injection hole (12) and natural gas jets located on a side of the natural gas injector (2) facing away from the fuel injector (1), increasing a diameter of the second fuel injection hole (12); and
in response to the fuel jet injected by the first fuel injection hole (11) being incapable of igniting other natural gas jets, increasing a diameter of the first fuel injection hole (11), wherein the other natural gas jets are located on a same side of the reference line (300) as the first fuel injection hole (11) and exclude the natural gas jets located on the side of the natural gas injector (2) facing away from the fuel injector (1).
